(19) Europäisches Patentamt

European Patent Office

Office européen des brevets

(11) EP 0 789 234 A1

# (12) EUROPEAN PATENT APPLICATION
published in accordance with Art. 158(3) EPC

(43) Date of publication:
13.08.1997 Bulletin 1997/33

(21) Application number: 95935560.3

(22) Date of filing: 25.10.1995

(51) Int. Cl.$^6$: **G01L 1/22**, G01G 3/14

(86) International application number:
PCT/JP95/02189

(87) International publication number:
WO 96/13703 (09.05.1996 Gazette 1996/21)

(84) Designated Contracting States:
DE GB

(30) Priority: 28.10.1994 JP 287122/94

(71) Applicant: KOMATSU LTD.
Minato-ku, Tokyo 107 (JP)

(72) Inventors:
• NABEOKA, Kazuyuki
Hiratsuka-shi Kanagawa 254 (JP)

• MURAKAMI, Taku
Hiratsuka-shi Kanagawa 254 (JP)
• KITSUNAI, Masami
Hiratsuka-shi Kanagawa 254 (JP)

(74) Representative: Meissner, Peter E., Dipl.-Ing. et al
Meissner & Meissner,
Patentanwaltsbüro,
Hohenzollerndamm 89
14199 Berlin (DE)

## (54) LOAD SENSOR SUBSTRATE AND LOAD SENSOR

(57) The present invention relates to a load sensor substrate and a load sensor, and high strength, high measurement accuracy, and a simple structure can be obtained. To this end, a load sensor substrate (100) has four small holes (21 to 24) formed in a metallic disc (10) symmetrically with respect to orthogonal axes (L1, L2) whose intersection is the disc center (O0), and strain gauges (31 to 34) having sensitivity directions which are the directions of the orthogonal axes disposed between the adjacent small holes (21 to 24). In addition, the load sensor secures a load sensor substrate (100g) inside a recess (320) of a pin (300), and seals the upper portion of the recess (320) by a plug (330) so as to be integrated with the pin (300).

FIG. IA

## Description

## TECHNICAL FIELD

The present invention relates to a load sensor substrate and a load sensor suitable for use in measurement of a load applied to a structural member.

## BACKGROUND ART

Hitherto, measurement of loads applied to machine structural members have been important from design and control viewpoints. A bridge using strain gauges is usually employed for the measurement. Strain gauges having wire gauges and leaf gauges placed on one surface (or both surfaces) of a flexible resin substrate and adhesive applied on the other surface are commonly used, and the adhesive side surface is adhered to a member to be measured.

For example, pin-type load sensors for measuring a load applied between pin-connected members have a pin in which strain gauges are incorporated, and include:

i) sensors in which a recess is provided on the outer surface of the pin, and strain gauges are stuck in the recess;
ii) sensors in which strain gauges are stuck on the inner surface of a cylindrical pin; and
iii) sensors in which recesses are provided on both end faces of the pin, and a member composed of strain gauges stuck to a distortion sensitive section is inserted in the recesses and then plugged (for example, refer to Japanese Unexamined Patent Publication No. 61-145426).

Load measurement with the above-described pin-type load sensor is performed by receiving a shearing distortion generated by a load applied to the pin with resistance change, and converting an output voltage of a bridge due to the resistance change into the load. Therefore, the strain gauges are normally adhered with sensitivity directions matching the directions of a principal stress based on a shearing force.

Incidentally, as is understood from the above-described pin-type load sensors for example, it is important for the load sensor for measuring loads applied to machine structural members to have not only high measurement accuracy but also high strength. However, the above-described conventional pin-type load sensors encounter the following problems.

According to the pin-type load sensors described in i), pin strength decreases because the recess is a stress concentration section. In order to increase the strength, the pin diameter may be enlarged. However, this decreases measurement accuracy. In addition, since the strain gauges are exposed, mounting thereof is easy, but the strain gauges are easily peeled off, and easily damaged, so that the usable life thereof is short.

According to the pin-type load sensors described in ii), when the cylinder is thickened, the strength increases, but the measurement accuracy decreases. In addition, the strain gauges are difficult to mount because they are mounted in the cylinder, and they easily peeled off, though not as easily to peeled off as the above pin-type load sensors described in i), so that the usable life thereof is short.

The pin-type load sensors described in iii) have high strength and high measurement accuracy. However, they have a large number of components, such as insertion members and plugs, and the structure is complicated.

## DISCLOSURE OF THE INVENTION

The present invention has been made to solve the problems of the prior art, and its object is to provide a load sensor substrate and a load sensor having high strength, high measurement accuracy, and a simple structure.

In a first aspect of a load sensor according to the present invention, there is provided a load sensor substrate having a plurality of strain gauges placed on one or both surfaces of the substrate,

wherein the substrate is a disc comprising a plurality of gently-shaped cut-out holes, and the strain gauges are disposed between the cut-out holes. In addition, the disc may be a stainless steel disc, and strain gauges may be thin film strain gauges.

In a second aspect of a load sensor, there is provided a load sensor substrate having a plurality of strain gauges placed on one or both surfaces of the substrate,

wherein the substrate is a metallic disc, four small holes symmetric to each other with respect to orthogonal axes whose intersection is a disc center are formed, and strain gauges insulated from the disc and having sensitivity directions being directions of the orthogonal axes are disposed on the orthogonal axes between the adjacent small holes.

In a third aspect of a load sensor, there is provided a load sensor substrate having a plurality of strain gauges placed on one or both surfaces of the substrate,

wherein the substrate is an approximately cross-shaped metallic cross-shaped plate, end faces of an intersecting portion of the cross-shaped plate are gently formed, and strain gauges insulated from the cross-shaped plate, and having sensitivity directions being directions of the length of a longitudinal section are disposed on the surface of the cross-shaped longitudinal section.

According to the present invention, there is provided a load sensor, wherein a load sensor substrate in the second or the third aspect of the present invention is secured in a recess formed in a pin connecting between members,

wherein the upper portion of the recess is sealed by a plug so as to be integrated with the pin,

wherein a lead hole for communication of the recess with the outer end of the pin and guiding lead wires of the strain gauges to the outside is provided, and

wherein a load applied between the members is measured.

In addition, the recess may be preferably formed at the position of a region where shearing force based on the load is generated on the pin, and the load sensor substrate may be preferably secured in the direction in which sensitivity directions of the load sensor substrate are the same as the directions of a principal stress based on the shearing force. Further, the pin sealed by the plug may be subjected to surface-hardening. Moreover, an amplifier connected to the lead wires may be provided in the vicinity of the load sensor substrate.

According to the load sensor substrate and the load sensor as described above, when a load is applied between two members, shearing force is generated in a region of the pin corresponding to a clearance between these members. And, a principal stress in an orthogonal direction is generated in the region. On the other hand, the load sensor substrate, be it circle, or cross-shaped plate, places the strain gauges thereon so that the sensitivity directions thereof cross to each other at right angles. Then, such a load sensor substrate is mounted to the pin so that the sensitivity directions of the strain gauges coincide with the directions of the principal stress. This enables to measure the load with high accuracy. If the situation is kept as it is, however, the pin strength is not changed, but the strain gauges are exposed, so that the usable life is shortened. Thus, a recess is provided at the region, and the load sensor substrate is first fixed in the recess by welding, etc., and then the recess is plugged and sealed so as to be integrated with the pin. In addition, lead wires from the strain gauges are inserted through a lead hole, and guided to the outside of the pin. Further, by providing an amplifier substrate between the lead wires, the load sensor becomes compact in size. By these arrangements, a load sensor substrate and a load sensor having high strength, high measurement accuracy, and a simple structure can be obtained.

BRIEF DESCRIPTION OF DRAWINGS

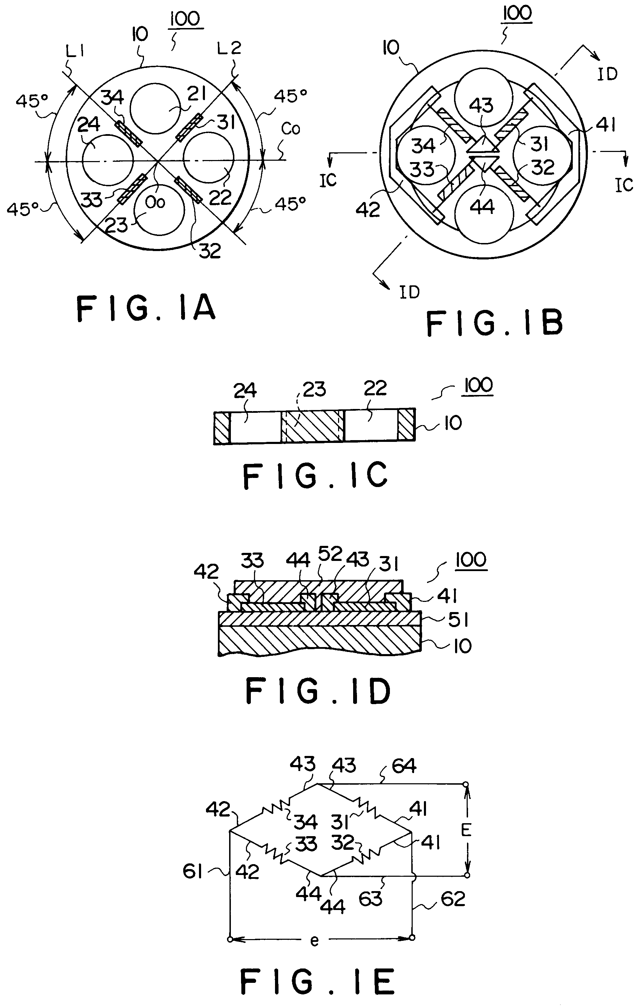

Figs. 1A, 1B, 1C, 1D and 1E are drawings each showing a load sensor substrate according to a first embodiment of the present invention, in which Fig. 1A is a front view omitting electrodes therefrom, Fig. 1B is a front view, Fig. 1C is a sectional view along IC-IC of Fig. 1B, Fig. 1D is a sectional view along ID-ID of Fig. 1B, and Fig. 1E is a bridge circuit diagram;

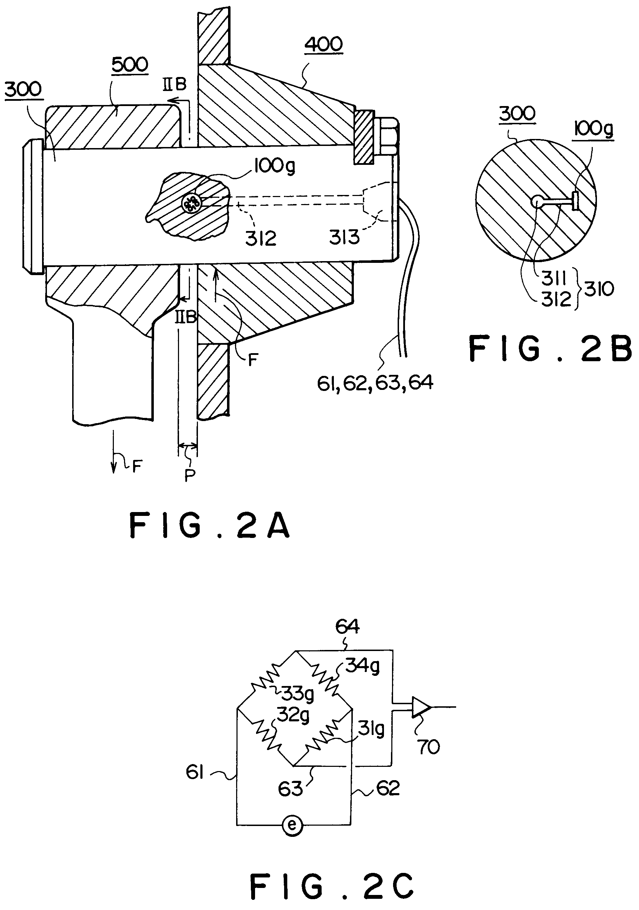

Fig. 2A, Fig. 2B, and Fig. 2C are drawings each showing a load sensor according to a second embodiment of the present invention, in which Fig. 2A is a front view of a main part cross section in an incorporated condition, Fig. 2B is a sectional view along IIB-IIB of Fig. 2A, and Fig. 2C is a bridge circuit diagram;

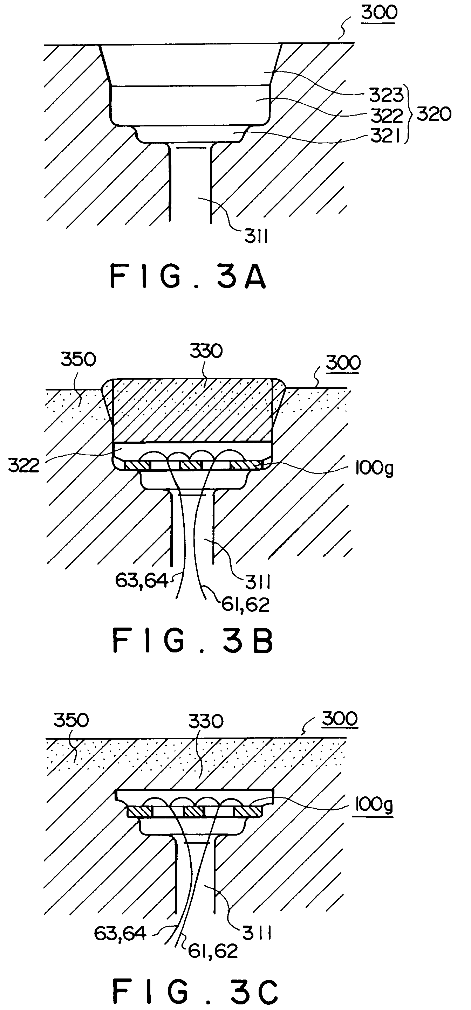

Fig. 3A, Fig. 3B, and Fig. 3C are drawings each showing a step of embedding and fixing a load sensor substrate in the load sensor according to the second embodiment, in which Fig. 3A is an illustration of a first step, Fig. 3B is an illustration of a second step, and Fig. 3C is an illustration of a final step;

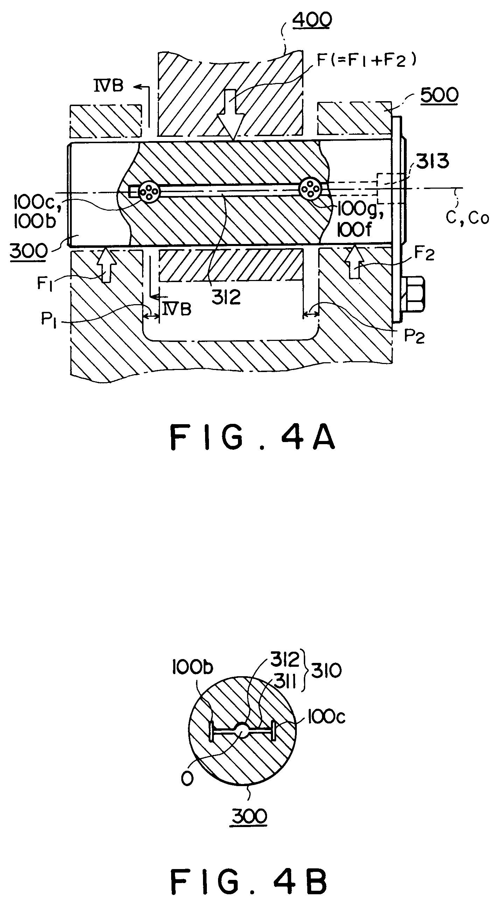

Fig. 4A and Fig. 4B are drawings each showing a load sensor according to a third embodiment of the present invention, in which Fig. 4A is a front view of a main part cross section in an incorporated condition, and Fig. 4B is a sectional view along IVB-IVB of Fig. 4A;

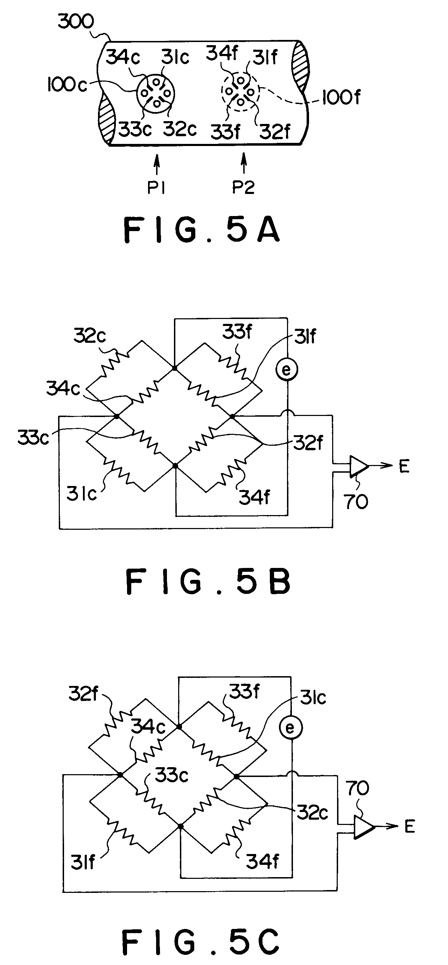

Fig. 5A, Fig. 5B, and Fig. 5C are drawings each showing a load sensor according to a fourth embodiment of the present invention, in which Fig. 5A is a main part front view, Fig. 5B is a bridge circuit diagram of a first example, and Fig. 5C is a bridge circuit diagram of a second example;

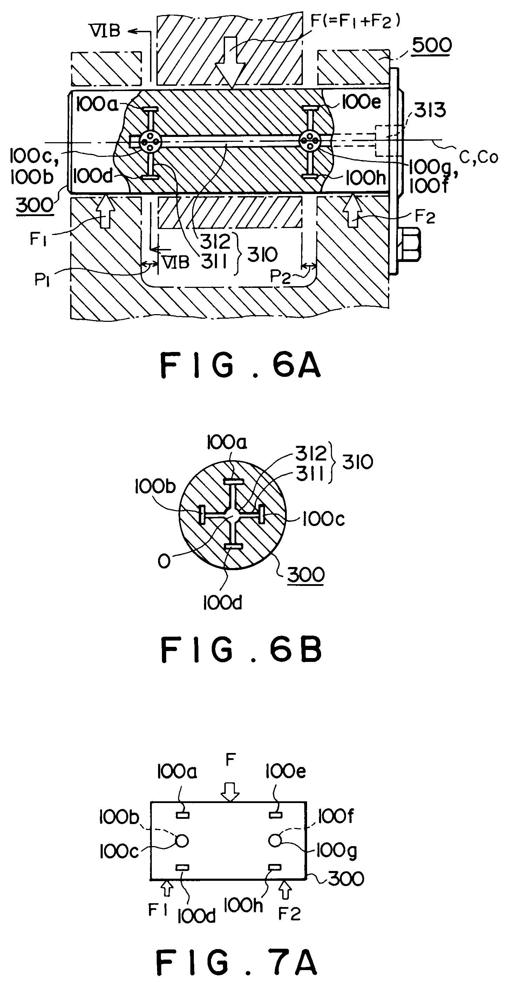

Fig. 6A and Fig. 6B are drawings each showing a load sensor according to a fifth embodiment of the present invention, in which Fig. 6A is a front view of a main part cross section in an incorporated condition, and Fig. 6B is a sectional view along VIB-VIB of Fig. 6A;

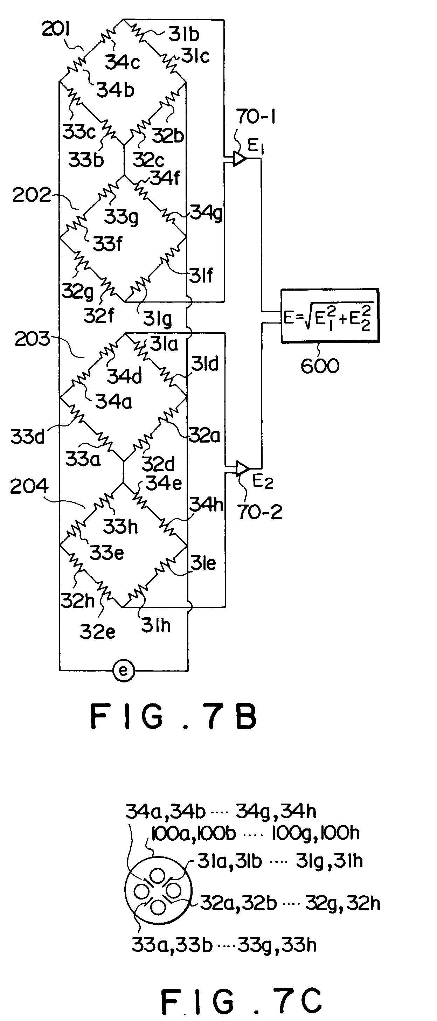

Fig. 7A, Fig. 7B, and Fig. 7C are drawings each illustrating a bridge circuit of the load sensor of the fifth embodiment, in which Fig. 7A is a layout drawing of the load sensor substrates, Fig. 7B is a bridge circuit diagram, and Fig. 7C is an illustration of arrangement of each of strain gauges of eight load sensor substrates 100a to 100h in Fig. 7A and Fig. 7B;

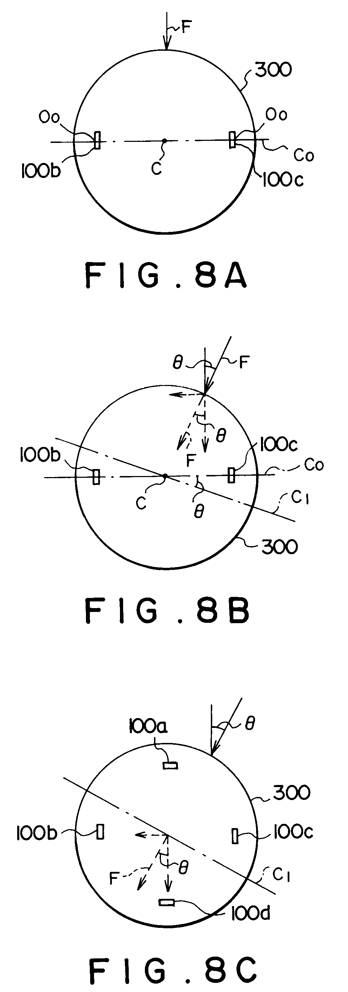

Fig. 8A, Fig. 8B, and Fig. 8C are drawings each illustrating the action of the load sensor according to the fifth embodiment, in which Fig. 8A is an illustration when the direction of a load is fixed, Fig. 8B is an illustration when the direction of the load changes, and Fig. 8C is an illustration of load synthesis; and

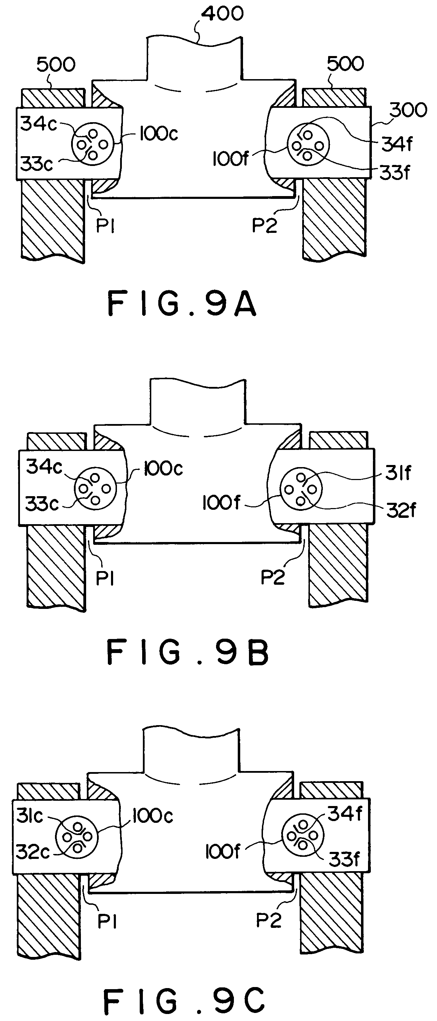

Fig. 9A, Fig. 9B, and Fig. 9C are drawings each showing a load sensor according to another embodiment of the present invention, in which Fig. 9A is an illustration of a form in which two load sensor substrates are moved to one side, Fig. 9B is an illustration of a form in which two load sensors are moved to the center, and Fig. 9C is an illustration of a form in which two load sensor substrates are moved to the outside.

BEST MODE FOR CARRYING OUT THE INVENTION

The preferred embodiments of a load sensor substrate and a load sensor according to the present invention will be described in detail with reference to the attached drawings.

A first embodiment will be described with reference to Figs. 1A to 1E. Referring to Figs. 1A to 1C, four small holes 21, 22, 23, and 24 (hereinafter, referred to small holes 20 when all thereof are pointed) are formed in a stainless steel disc 10 of a load sensor 100 symmetrically to each other with respect to an orthogonal axes L1 and L2 whose intersection is a disc center Oo. In addition, thin film strain gauges 31, 32, 33, and 34 (hereinafter, referred to as strain gauges 30 when all thereof are pointed), which are insulated from the disc 10 and sensitivity directions coincide with the directions of the orthogonal axes, are patterned on the orthogonal axes L1, and L2 between small holes 21 and 22, 22 and 23, 23 and 24, and 24 and 21, which are adjacent to each other. On another area, electrodes 41, 42, 43, and 44 (hereinafter, referred to as electrodes 40 when all thereof are pointed) for connecting each of the strain gauges 30 through a bridge are patterned.

The small holes 20 are the holes for preventing stress concentration. The small holes 20 of circle are ideal. However, since it is essential that the stress concentration can be prevented, the small holes 20 may be holes having gentle shape (cutout hole), such as long holes, half holes, and rice ball-like holes, instead of circle. In addition, so long as a gentle shape, an approximately cross-shaped plate in which end faces of an intersecting potion of an approximately crossed shape are gently molded, for example, a cross-shaped plate may be employed instead of the disc 10.

A bridge pattern between the strain gauges 30 and the electrodes 40 are formed as an entire bridge shown in Fig. 1E. This patterning is, as shown in Fig. 1D, formed by laminating an insulating film 51 made of $SiO_2$ to be formed on the disc 10, the strain gauges 30 (only strain gauges 31, 33 are shown in the drawing) made of semiconductor thin films due to evaporation, the thin film electrodes 40 made by aluminum evaporation, and a protective film 52 made of SiNx in this order. Incidentally, in Fig. 1E, numeral e denotes a voltage applied to the bridge, and E denotes an output voltage of the bridge. Lead wires 61, 62, 63 and 64 are soldered onto each of the electrodes 40.

Incidentally, the number of the strain gauges 30 and the electrodes 40 is not restricted to four, and the number of them may be determined for each measurement object of the load sensor substrate 100, or for each construction of tolerance, a double-sided installation, a single-sided installation, the presence or absence of an external resistance, the above-described entire bridge, a semi-bridge, a serial bridge, a parallel bridge, and contents of computing. Measurement objects of the load sensor substrate 100 include shearing force, vertical force, and torsional force (incidentally, when measuring the torsional force, it can be regarded as a torque sensor rather than a load sensor).

According to such a construction, the disc 10 comprises four small holes 20 and an intersecting portion of a approximately cross-shaped plate, etc. is formed into a gentle shape, so that stress concentration is hard to occur. In addition, since radial directions between the small holes 20 become extension and contraction sections, stress anisotropy becomes significant. Further, since the load sensor substrate 100 is of a plate shape, the load immediately changes to distortion. These matters improve measurement accuracy.

In addition, since the disc 10 and the approximately cross-shaped plate are made of metal, the strain gauges 30 and the electrodes 40 can be formed into thin films. Such thin film strain gauges 30 can originally provide several times of measurement accuracy as compared with wire gauges and leaf gauges. Moreover, the thin film gauges 30 can reduce the size of the load sensor substrate 100, and have excellent yield strength with respect to vibrations from the outside and a mechanical damaging force as compared with the wire gauges and the leaf gauges. Incidentally, the wire gauges and the leaf gauges may be used as needed with respect to the metallic disc 10, etc. Furthermore, since the disc 10, etc. are made of metal, the load sensor substrate 100 can be directly fastened to a body to be measured, such as a pin and a steel plate, by welding and expansion fit.

Next, a second embodiment according to a load sensor using the above-described load sensor substrate 100 will be described. This embodiment relates to a pin-type load sensor for measuring a load applied between members connected through a pin.

Referring to Figs. 2A to 2C, a pin 300 is made of a steel member (an SC material, for example), and cantilevered, and a stationary member 400 and a rotation member 500 are connected through the pin. A load F of approximately fixed in the downward direction is applied to the pin 300. A load sensor substrate 100g, which is the same as the load sensor 100, is placed and fixed in a region P (a clearance between the members 400 and 500) where shearing force due to the load F is generated so that sensitivity directions of the strain gauge 30 coincide with directions of a principal stress based on the shearing force.

A three-stage countersunk hole (hereinafter, referred to as a recess 320) is formed in a portion of the pin 300 corresponding to the region P, as shown in Fig. 3A, and the load sensor substrate 100g is secured to the bottom of the second stage 322 with the outer periphery thereof welded, as shown in Fig. 3B. A blind plug 330 made of steel member is fitted to the first stage 323, as shown in Fig. 3B, and outer peripheral portion is welded. After welding, the blind plug 330 is subjected to high-frequency induction hardening together with the surface of the pin 300, whereby a surface-hardened layer 350 is formed, and thereafter polished. Therefore, externally it is no different from a normal pin, as shown in Fig. 3C. Incidentally, a sub lead hole 311, which is in communication with a storage chamber 313 of an amplifier substrate 70 (refer to Fig. 2C) through a main lead hole 312, is formed in the bottom of the third stage 311, and lead wires 61, 62, 63, and 64 from the pin-type load sensor 100g are connected to the amplifier substrate 70 through the lead holes 310 (311, 312). Lead wires from the amplifier substrate 70 are connected to a non-illustrated external operation unit, and the load F is calculated by the operation unit.

Incidentally, the shape of the recess 320 is not restricted to three stages, and it may be multiple stages, two stages, one stage, or a tapered hole may be employed. In addition, a recess may be also formed in the back of the blind plug 330, the outer periphery of the load sensor substrate 100g may be welded and fixed in the recess, the blind plug 330 may be fitted into the recess 320 of the pin 300, and the outer periphery may be welded (such a feature is included in the claims). In addition, although the sub lead hole 311 is formed in a vertical direction with respect to the pin 300, it may be preferably formed into a hole of a slanting direction from a strength viewpoint. The bridge of this embodiment is connected as shown in Fig. 2C.

Figs. 4A and 4B illustrate a load sensor of a third embodiment, and the pin 300 is supported at its both ends by the member 500. The pin 300 has each twos of load sensor substrates 100b, 100c, 100f, 100g embedded and fixed, in the manner shown in Fig. 3C, in left and right regions P1 and P2 shown in the drawing where shearing forces based on the load F (= F1 + F) are generated. That is, the region P1 has each one of the load sensor substrates 100b, and 100c embedded in each of front and reverse sides of the paper surface of Fig. 4A. On the other hand, the region P2 similarly has each one of the load sensor substrates 100f, and 100g embedded in each of both front and reverse sides. Incidentally, a bridge circuit of this embodiment is a circuit in which bridges 203 and 204, and an amplifier substrate 70-2 are excluded with respect to Fig. 7B of a fifth embodiment which is described below.

Fig. 5A illustrates a load sensor of a fourth embodiment which is the same as that of the third embodiment in that the pin is supported at its both ends. However, with respect to the paper surface of Fig. 5A, the region P1 has the load sensor substrate 100c embedded in the front side, while the region P2 has the load sensor substrate 100f embedded in the reverse side to provide a load sensor having these two substrates. Figs. 5B and 5C illustrate examples of the bridges in this embodiment, in which the bridges of the load sensor substrates 100c and 100f are connected in parallel to average both outputs.

Figs. 6A and 6B illustrate a load sensor of a fifth embodiment, in which the pin 300 is supported at its both ends similar to the third and fourth embodiments as described above. In the left and right regions P1 and P2 shown in the drawing where shearing forces are generated, eight load sensor substrates 100a to 100h are embedded and fixed in the manner shown in Fig. 3C. That is, the region P1 has four load sensor substrates 100a to 100d each embedded in each of upper and lower, and front and reverse sides of the paper surface of Fig. 6A. On the other hand, the region P2 similarly has load sensor substrates 100e to 100h each embedded in each of upper and lower, and front and reverse sides of the paper surface.

Fig. 7A illustrates eight load sensor substrates 100a to 100h embedded in the pin 300, and Fig. 7B illustrates a bridge example of this embodiment. In addition, Fig. 7C is an illustration of arrangement of each of strain gauges 31 (31a, ...31h), 32 (32a, ...32h), 33 (33a, ...33h), and 34 (34a, ...34h) in each of the load sensor substrates 100a, ...100h. Incidentally, each of the strain gauges 30 are arranged similarly, numerals of the strain gauges 30 are described in Fig. 7C.

Actions and effects of the fifth embodiment will be described with reference to Figs. 8A to 8C while comparing with the second embodiment and the third embodiment.

Referring to Fig. 8A, two load sensor substrates 100b and 100c are embedded and fixed so that the disc center Oo coincides with a bending neutral plane Co of the pin 300 based on the load F, and each of the strain gauges 30 are on the position rotated through 45° from the neutral plane Co (refer to Fig. 1A). For example, like a mounting pin for a suspension cylinder of a dump truck, when the direction of the load F (vehicle weight) with respect to the pin is fixed, the bending neutral plane Co is also fixed. Thus, one load sensor substrate may be provided (i.e., the second embodiment). That is, a bridge construction is provided in which the strain gauges 30 are arranged symmetrically to each other with respect to the bending neutral plane Co, and tensile stress and compressive stress are canceled. Therefore, when the load F is applied, only a principal stress generated by shearing force due to the load F can be detected, so that the load F can be measured with high accuracy.

However, the direction of the load F with respect to the pin sometimes changes like a turning base and a boom, a boom and an arm, or an arm and a bucket of a hydraulic digging machine. In the case of changing, the positions (on the neutral plane Co) of the load sensor substrates 100b, and 100c are shifted by an angle of rotation θ with respect to the true bending neutral surface C1 based on the load F, as shown in Fig. 8B. For this reason, only one load sensor substrate 100 like the above second embodiment cannot measure the load F accurately.

Incidentally, when the directional changes of the load F are not so substantial, and measuring error due to the directional changes is within the permitted limit, the construction shown in Fig. 8A, for example, the construction of the third embodiment and the fourth embodiment may be employed. That is, each of the strain gauges 30 of two load sensor substrates 100b, and 100c provide a bridge for canceling tensile stress and compressive stress due to bending based on the load F, only shearing force due to the load F can be measured although errors are included. The errors are generated by the fact that the more the direction of the load changes (the larger the angle of rotation θ), the measurement becomes smaller. Therefore, when the use with an error of 15 % (-30° < θ < +30°) is a permitted limit, the construction of the third or the fourth embodiment may be preferable.

The fifth embodiment may be preferable when the directional changes of the load F cannot be ignored as measurement errors, or accurate measurement is required, with respect to the third and the fourth embodiments. As shown in Fig. 8C, principal stresses based on cos θ of shearing force due to the load F are measured on the load sensor substrates 100c, and 100b. On the other hand, principal stresses based on sin θ of the shearing force are measured on the load sensor substrates 100a, and 100d. Therefore, as shown in the bridge of Fig. 7B, by calculating both outputs E1 and E2 with a microcomputer 600, the load F can be outputted accurately. Incidentally, even in this case, it is necessary to use a bridge which can cancel tensile stress and compressive stress due to bending based on the load F. That is, according to the fifth embodiment, the load F can be measured with high accuracy even if directional changes of the load F occur.

Incidentally, as a mode example of the fifth embodiment, only two load sensor substrates can respond to the directional changes of the load F. Referring to Figs. 6A and 6B, for example, a load sensor may be employed which comprises two load sensor substrates phased with each other by 90° like the load sensor substrates 100a and 100b shown on the left of the drawings, the load sensor substrates 100e and 100g shown on the right of the drawings, or the load sensor substrates 100a and 100g shown on left and right of the drawings.

According to the pin-type load sensor of the above-described embodiments, the load sensor substrate 100 is arranged in the clearance (regions P1 and P2) between the members 400 and 500. However, these regions P1 and P2 are often very narrow. In such a case, for example, load sensor substrates shown below may be employed, and a load sensor on which these are arranged may be employed.

(1) As shown in Fig.9A, both load sensor substrates 100c and 100f are moved to the right side so that the strain gauges 33c, 34c, 33f, and 34f shown on the left side of the drawing of each of the left and right load sensor substrates 100c and 100f become regions P1 and P2. Incidentally, although each of the load sensor substrates 100c and 100f comprise four strain gauges 31c, 32c, 33c, 34c, and 31f, 32f, 33f, 34f, each of two strain gauges are shown in the drawing to make them understandable. The same is applied to Figs. 9B and 9C.

(2) As shown in Fig. 9B, the load sensor substrate 100c is moved to the right side so that only the strain gauges 33c and 34c on the left side of the load sensor substrate 100c become the region P1. On the other hand, the load sensor substrate 100f is moved to the left side so that only the strain gauges 31f and 32f on the right side of the load sensor substrate 100f become the region P2.

(3) As shown in Fig. 9C, the load sensor substrate 100c is moved to the left side so that only the strain gauges 31c and 32c on the right side of the load sensor substrate 100c become the region P1. On the other hand, the load sensor substrate 100f is moved to the right side so that only the strain gauges 33f and 34f on the left side of the load sensor substrate 100f become the region P2.

Although the embodiments according to the present invention have been described above, the invention is not limited thereto. For example, although the same numbers of the load sensor substrates 100 are embedded left and right in the drawings, they may be embedded only one side when left and right loads F1 and F2 are equal ( F1 = F2 ). Incidentally, the left and right load sensor substrates 100 may be different in number according to requirement accuracy. According to the third and the fifth embodiments, as shown in Fig. 7B, for example, two bridges (201 and 202, 203 and 204) are connected in serial, and polarities are equated to provide an additive type. However, as described above, according to the object, a parallel bridge, a serial, and an AC-DC power source bridge, etc. may be employed.

INDUSTRIAL APPLICABILITY

The present invention is useful as a load sensor substrate which can provide high measurement accuracy, and which can be easily reduced in size since stress concentration is relieved, and distortion due to a load is easily appeared. In addition, the load sensor substrate is embedded in a pin, and the surface is sealed to be integrated, so that a load sensor rarely decreases strength, usable life thereof is long, and uses small numbers of components so as to provide a simple structure.

**Claims**

1. A load sensor substrate having a plurality of strain gauges placed on one or both surfaces of the substrate,
   wherein said substrate is a disc (10) comprising a plurality of gently-shaped cut-out holes (21, 22, 23, 24), and said strain gauges (31, 32, 33, 34) are disposed between said cut-out holes (21, 22, 23, 24).

2. A load sensor substrate according to claim 1, wherein said disc (10) is a stainless steel disc (10), and said strain gauges (31, 32, 33, 34) are thin film strain gauges (31, 32, 33, 34).

3. A load sensor substrate having a plurality of strain gauges placed on one or both surfaces of the substrate,
   wherein said substrate is a metallic disc (10), four small holes (21, 22, 23, 24) symmetric to each other with respect to orthogonal axes (L1, L2) whose intersection is a disc center (Oo) are formed, and said strain gauges (31, 32, 33, 34) insulated from said disc (10), and having sensitivity directions thereof being the directions of said orthogonal axes (L1, L2) are disposed on said orthogonal axes (L1, L2) between said adjacent small holes (21, 22, 23, 24).

4. A load sensor substrate having a plurality of strain gauges placed on one or both surfaces of the substrate,
wherein said substrate is an approximately cross-shaped metallic cross-shaped plate, end faces of intersecting portion of said cross-shaped plate are gently formed, and said strain gauges (31, 32, 33, 34) insulated from said cross-shaped plate, and having sensitivity directions thereof being directions of the length of a longitudinal section are disposed on the surface of said cross-shaped longitudinal section.

5. A load sensor wherein a load sensor substrate (100g) according to claim 3 or 4 is secured in a recess (320) formed in a pin (300) connecting between members (400, 500),
wherein the upper portion of said recess (320) is sealed by a plug (330) so as to be integrated with said pin (300),
wherein a lead hole (310) for communication of said recess (320) with the outer end of said pin (300) and guiding lead wires (61, 62, 63, 64) of said strain gauges (31, 32, 33, 34) to the outside is provided, and
wherein a load (F) applied between said members (400, 500) is measured.

6. A load sensor according to claim 5, wherein said recess (320) is formed at the position of a region (P) where shearing force based on said load (F) is generated on said pin (300), and wherein said load sensor substrate (100g) is secured in the direction in which sensitivity directions of said load sensor substrate (100g) are the same as the directions of a principal stress based on said shearing force.

7. A load sensor according to claim 5, wherein said pin (300) sealed by said plug (330) is subjected to surface-hardening.

8. A load sensor according to claim 5, wherein an amplifier substrate (70) connected to said lead wires (61, 62, 63, 64) is provided in the vicinity of said load sensor substrate (100g).

**Amended claims under Art. 19.1 PCT**

1. (Canceled)

2. (Canceled)

3. (Canceled)

4. (Canceled)

5. (Amended) A load sensor which secures a load sensor substrate having a plurality of strain gauges placed on one or both surfaces of a metallic disc inside a recess formed in a pin connecting between members,
wherein the outer periphery of said load sensor substrate (100g) is secured to the inner peripheral surface of said recess (320),
wherein the upper portion of said recess (320) is separated upward from said load sensor substrate (100g) so as to be provided with a plug (330), and sealed by said plug (330) so as to be integrated with said pin (300),
wherein a lead hole (310) for communication of said recess (320) with the outer end of said pin (300), and guiding lead wires (61, 62, 63, 64) of said strain gauges (31, 32, 33, 34) to the outside is provided, and
wherein a load (F) applied between said members (400, 500) is measured.

6. (Canceled)

7. A load sensor according to claim 5, wherein said pin (300) sealed by said plug (330) is subjected to surface-hardening.

8. (Canceled)

9. (Additional) A load sensor according to claim 7, wherein said surface-hardening is high-frequency induction hardening.

F I G . I A

F I G . I B

F I G . I C

F I G . I D

F I G . I E

FIG.2A

FIG.2B

FIG.2C

300

323
322  } 320
321

311

F I G . 3 A

350    330    300

322

100g

63,64    311
61,62

F I G . 3 B

350    330    300

100g

63,64    311
61,62

F I G . 3 C

FIG. 4A

FIG. 4B

F I G . 5 A

F I G . 5 B

F I G . 5 C

F I G . 6A

F I G . 6B

F I G . 7A

201

31b

34c 31c

34b

33c 32b

33b 32c

34f

202 33g 34g

33f

31f

70-1 $E_1$

32g

32f 31g

203 31a

31d

34d

34a

32a

33d

33a 32d

34e

204 34h

33h

33e 31e

32h

31h 70-2 $E_2$

32e

(e)

600

$$E = \sqrt{E_1^2 + E_2^2}$$

# FIG.7B

34a,34b ---- 34g,34h

100a,100b ---- 100g,100h

31a,31b ---- 31g,31h

32a,32b ---- 32g,32h

33a,33b ---- 33g,33h

# FIG.7C

F I G . 8 A

F I G . 8 B

F I G . 8 C

400

500                  500

34c           100c                300

33c               100f          34f

33f

P1              P2

## F I G . 9 A

34c          100c               31f

33c            100f         32f

P1              P2

## F I G . 9 B

31c          100c            34f

32c            100f          33f

P1              P2

## F I G . 9 C

<div align="center">INTERNATIONAL SEARCH REPORT</div>

| | International application No. |
|---|---|
| | PCT/JP95/02189 |

**A. CLASSIFICATION OF SUBJECT MATTER**

Int. Cl$^6$  G01L1/22, G01G3/14

According to International Patent Classification (IPC) or to both national classification and IPC

**B. FIELDS SEARCHED**

Minimum documentation searched (classification system followed by classification symbols)

Int. Cl$^6$  G01L1/22, G01G3/14

Documentation searched other than minimum documentation to the extent that such documents are included in the fields searched

Jitsuyo Shinan Koho          1926 - 1994
Kokai Jitsuyo Shinan Koho    1971 - 1994

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP, 55-13686, Y2 (Kyowa Dengyo K.K.),<br>March 27, 1980 (27. 03. 80),<br>Lines 27 to 36, column 4, Fig. 6 (Family: none) | 1, 3<br>2, 4 |
| Y | JP, 5-141907, A (Tokyo Electric Co., Ltd.),<br>June 8, 1993 (08. 06. 93),<br>Lines 12 to 20, column 3, Figs. 3 to 5<br>& EP, 534226, A | 2, 4 |
| X | JP, 63-302333, A (Komatsu Ltd.),<br>December 9, 1988 (09. 12. 88),<br>Line 1, upper left column to line 16, lower<br>left column, page 3; Figs. 1 to 5<br>(Family: none) | 5-8 |
| A | JP, 4-204338, A (Komatsu Ltd.),<br>July 24, 1992 (24. 07. 92),<br>Lines 11 to 16, lower right column, page 4<br>(Family: none) | 7 |

☐ Further documents are listed in the continuation of Box C.    ☐ See patent family annex.

\* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| December 1, 1995 (01. 12. 95) | December 26, 1995 (26. 12. 95) |

| Name and mailing address of the ISA/ | Authorized officer |
|---|---|
| Japanese Patent Office | |
| Facsimile No. | Telephone No. |

Form PCT/ISA/210 (second sheet) (July 1992)